# EUROPÄISCHE PATENTSCHRIFT

(11) **EP 0 447 510 B1**
(45) Veröffentlichungstag und Bekanntmachung des Hinweises auf die Patenterteilung: **11.08.1993**
(21) Anmeldenummer: 90914059.2
(22) Anmeldetag: 27.09.1990
(51) Int. Cl.: B60K 17/10, B60K 6/04

(54) **ANTRIEBSSYSTEM FÜR KRAFTFAHRZEUGE UND KRAFTFAHRZEUG MIT EINEM SOLCHEN ANTRIEBSSYSTEM**
AUTOMOTIVE SYSTEM FOR MOTOR VEHICLES, AND MOTOR VEHICLES WITH AN AUTOMOTIVE SYSTEM OF THIS KIND
SYSTEME DE PROPULSION POUR VEHICULES A MOTEUR ET VEHICULE A MOTEUR EQUIPE AVEC LEDIT SYSTEM

(30) Priorität: 09.10.1989 AT 2318/89
(43) Veröffentlichungstag der Anmeldung: 25.09.1991
(73) Patentinhaber: ÖKOMOBIL Gesellschaft für ökologische Technologien für Fahrzeuge, Gesellschaft m.b.H, 1010 Wien (AT)
(72) Erfinder: THURNER, Jörg, A-1180 Wien (AT)
(74) Vertreter: Collin, Hans, Dipl.-Ing. Dr.
(86) Internationale Anmeldenummer: AT9000094
(87) Internationale Veröffentlichungsnummer: WO9104879

(56) Entgegenhaltungen:
- EP-A- 47 644
- EP-A- 249 002
- DE-A- 3 409 566
- DE-A- 3 514 375
- DE-A- 3 709 833
- GB-A- 2 019 537

## Beschreibung

Die Erfindung bezieht sich auf ein Antriebssystem für Kraftfahrzeuge, wobei für den Antrieb mindestens zweier Räder an zumindest einer Achse mindestens ein hydrostatischer Hydromotor vorgesehen ist, der von mindestens einer mittels eines Verbrennungsmotors und/oder eines Elektromotors angetriebenen Pumpe über einen zwischengeschalteten Druckspeicher mit Druckflüssigkeit angetrieben ist, wobei die beim Bremsen des Fahrzeuges anfallende Bremsenergie über den dabei als Pumpe wirkenden Hydromotor zum Aufladen des Druckspeichers ausnützbar ist und wobei die Antriebsverbindung vom Verbrennungsmotor und/oder Elektromotor zu den Rädern des Kraftfahrzeuges ausschließlich auf hydraulischem Wege erfolgt, wobei weiters der Hydromotor mit einer von außen verstellbaren Schräg- bzw. Schwenkscheibe ausgestattet ist und mit dem Druckspeicher in einer direkten Zweirichtungsverbindung steht, wobei die Hochdruckseite beim Hydromotor sowohl beim Beschleunigen als auch beim Bremsen des Kraftfahrzeuges immer am gleichen hydraulischen Anschluß des Hydromotors angeordnet ist.

In den vergangenen Jahren sind von verschiedenen Seiten Vorschläge veröffentlicht worden, die sich auf den sogenannten Hybridantrieb für Kraftfahrzeuge unter Verwendung von Hydromotoren beziehen und neben der dadurch gewonnenen Anpassungsmöglichkeit an das Leistungsprofil der Antriebsarten auch die Möglichkeit vorsehen, eine weitgehende Rückgewinnung der Bremsenergie im Sinne eines sehr rationellen und auch ökologisch orientierten Brennstoffeinsatzes zu ermöglichen. Beispielsweise wird in diesem Zusammenhang auf einen in der Zeitschrift "ölhydraulik und pneumatik" (Nr. 15/1971, Seiten 427 - 429) veröffentlichten Aufsatz von Dipl.Ing. Korkmaz: "Hydrospeicher als Beschleunigungselement" verwiesen, worin ein elektrohydraulischer Hybridantrieb mit Hydromotor, Hydropumpe, Elektromotor, Hochdurckspeicher und Niederdruckspeicher beschrieben ist.

Zielsetzung der Erfindung ist es, diese Technik für die Nutzanwendung noch besser praktikabel zu machen und dies wird realisiert durch die Kombination folgender an sich bekannter Merkmale:
im Bremsbetrieb versorgt der Hydromotor einen aus einer Speisepumpe samt zugeordnetem Vorspannventil gebildeten Speisepumpenkreis zur Förderung von Hydrauliköl aus dem drucklos gehaltenen Reservoir;
ein dem Hydromotor vorgeschaltetes Rückschlagventil sichert während der Betriebsphasen Stillstand und Leerlauf die leckfreie Absperrung von Hydrauliköl vom Hydromotor.

Erreicht wird damit, daß der Verzicht auf einen unter Druck gehaltenen Speicher für die Druckflüssigkeit zugleich das damit verbundene Sicherheitsrisiko vermeidet und durch den erfindungsgemäß vorgesehen Speisepumpenkreis können kavitationsbedingte Schädigungen im Leitungssystem vermieden werden.

Gemäß einem weiteren Erfindungsmerkmal ist das Antriebssystem als Vierradantrieb ausgebildet, so daß für jedes der Fahrzeugräder in an sich bekannter Weise ein eigener, damit verbundener Hydromotor vorgesehen ist, und daß in an sich bekannter Weise pro Rad von Sensoren oder Steuerorganen gegebene Signale mittels eines Rechners in entsprechend unterschiedliche bzw. gleiche Schragstellungen der einzelnen Schrägscheiben umsetzbar sind.

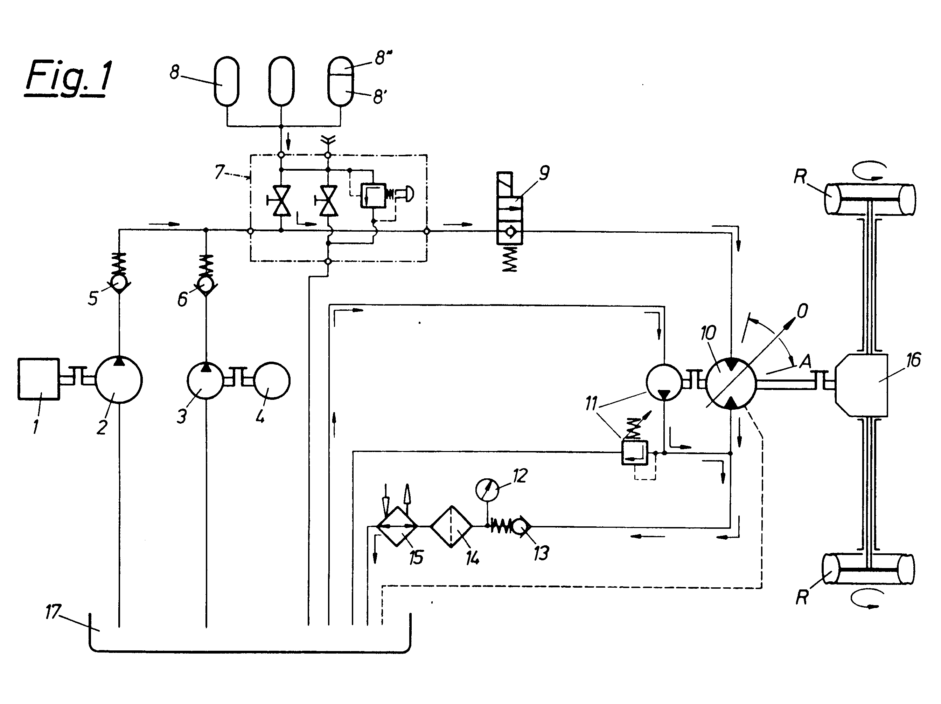

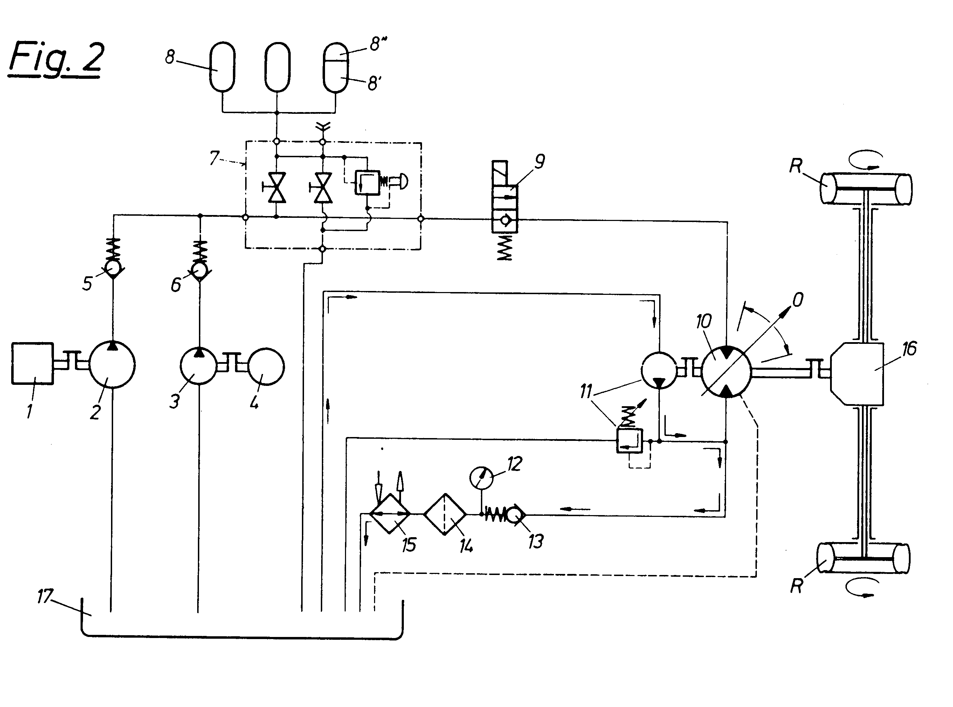

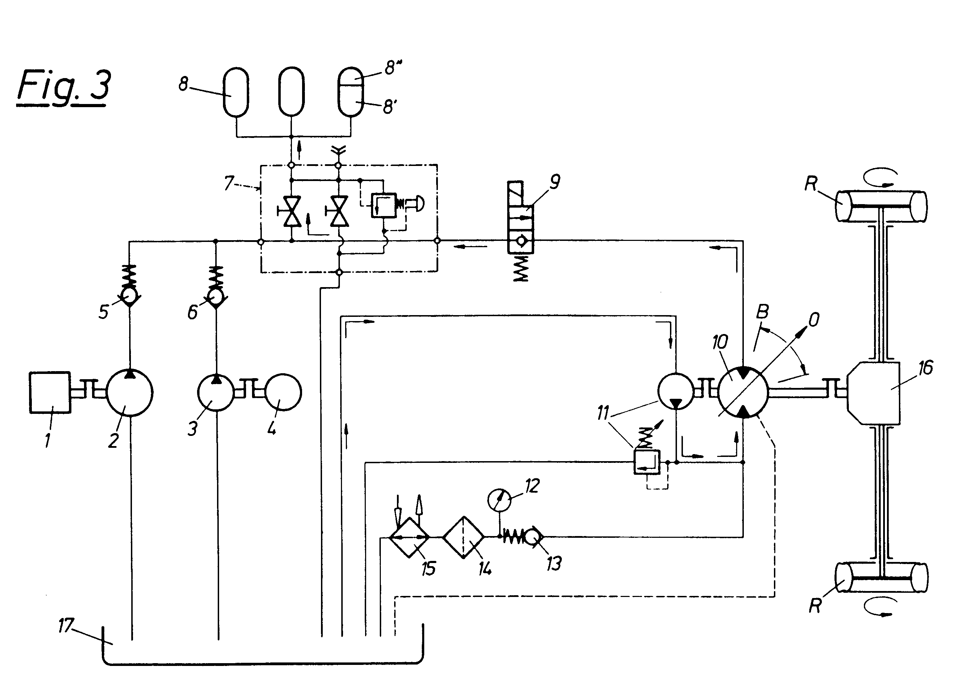

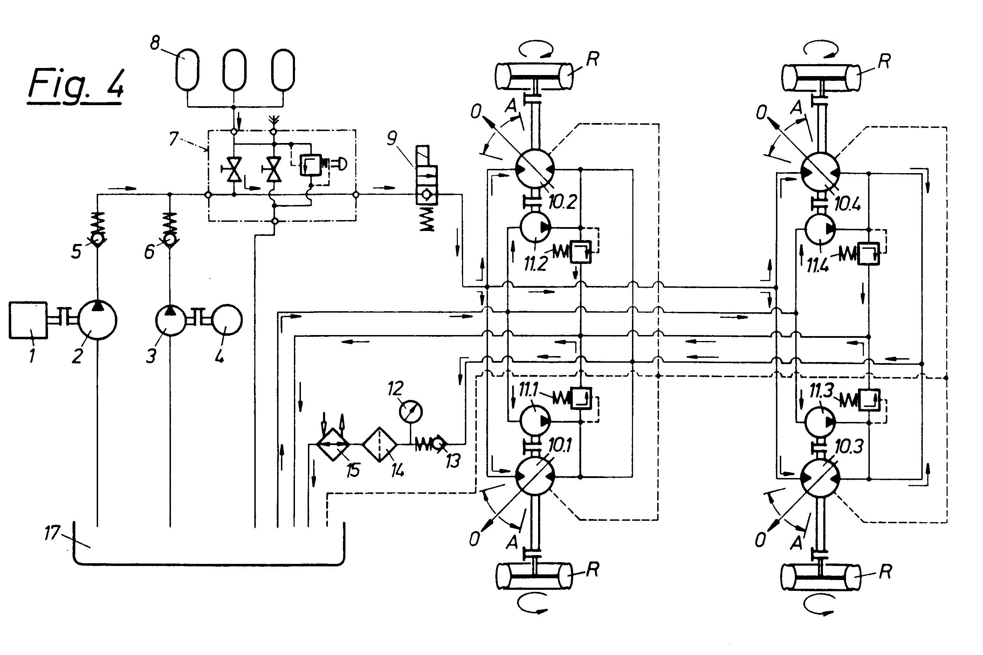

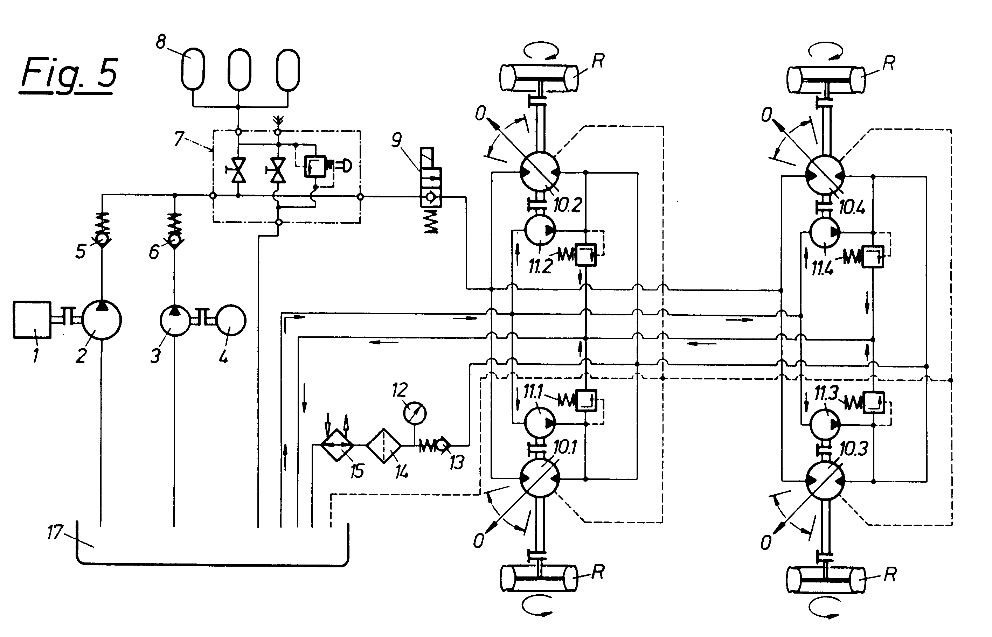

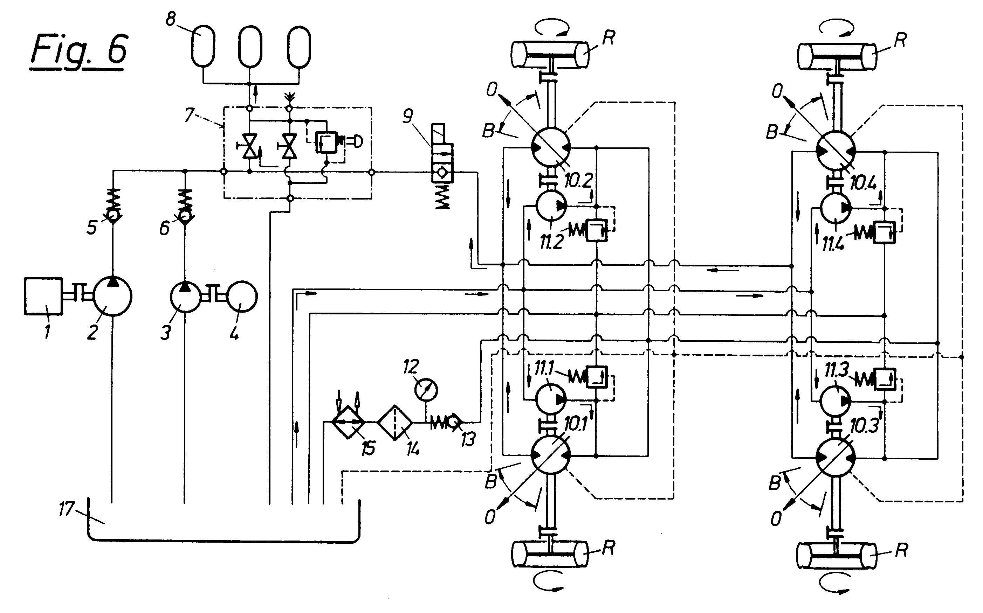

Die Erfindung wird nun an Hand von Ausführungsbeispielen unter Bezugnahme auf die Zeichnungen näher erläutert; in diesen zeigen Fig. 1 den Schaltplan für ein erfindungsgemäßes Antriebssystem für eine Achse eines Kraftfahrzeuges in der Anfahr- bzw. Beschleunigungsphase, Fig. 2 eine analoge Darstellung wie in Fig. 1 aber nun in der Freilauf- bzw. Leerlaufphase, Fig. 3 eine analoge Darstellung wie in Fig. 1 aber nun in der Brems- bzw. Verzögerungsphase, Fig. 4 den Schaltplan ähnlich wie in Fig. 1 für einen Vierradantrieb in der Anfahr- bzw. Beschleunigungsphase, Fig. 5 eine analoge Darstellung wie Fig. 4 aber nun in der Freilauf- bzw. Leerlaufphase und Fig. 6 eine analoge Darstellung wie in Fig. 4 aber nun in der Brems- bzw. Verzögerungsphase.

Die Fig. 1-3 zeigen ein Ausführungsbeispiel des erfindungsgemäßen Antriebssystems für Kraftfahrzeuge, wobei ein verstellbarer, hydrostatischer Hydromotor 10 zwei auf einer Achse angeordnete angetriebene Räder R in konventioneller Weise über eine Kardanwelle und ein Differentialgetriebe 16 antreibt. Mit dem π -förmigen Symbol in der vom Hydromotor 10 zum Differentialgetriebe 16 führenden Welle ist eine mechanische Antriebsverbindung gekennzeichnet, die elastische oder kardanische Eigenschaften aufweisen kann; gleiche Symbole werden in allen Figuren für alle derartigen Antriebsverbindungen, z.B. zwischen dem Verbrennungsmotor 1 und der hydraulischen (Haupt-)Pumpe 2 für die Druckflüssigkeit, verwendet.

Im Anfangszustand steht der Verbrennungsmotor 1 und die (Haupt-)Pumpe 2 für die Druckflüssigkeit bzw. das Hyrauliköl still; wenn zunächst der für die grundlegende Funktion des Antriebssystems nicht erforderliche erste Nebenantrieb 3, z.B. ein aus Solarzelle und Elektromotor 4 bestehender Solarantrieb mit der damit mechanisch gekuppelten ersten Nebenpumpe 3 als nicht vorhanden angenommen wird, wäre der Druckspeicher 8 zunächst drucklos. Es muß somit zuerst der Verbrennungsmotor 1 gestartet werden, um Druckflüssigkeit vom drucklosen Reservoir 17 über die Pumpe 2, das Rückschlagventil 5 und den Speichersicherheitsblock 7 in den Druckspeicher 8 zu fördern. Sobald der Druckspeicher 8 den erforderlichen Druck der beispielsweise in der Größenordnung vom 200-400 Bar liegt, aufweist, kann das Kraftfahrzeug in Bewegung gesetzt werden.

Falls der Druckspeicher 8 allerdings infolge des Vorhandenseins eines Solarantriebes 4 über die Nebenpumpe 3 und das Rückschlagventil 6 bereits über einen längeren Zeitraum aufgeladen worden ist, kann das Kraftfahrzeug in Bewegung gesetzt werden, ohne vorher den Verbrennungsmotor 1 anlassen zu müssen. Das Starten bzw. Anlassen und Abstellen des Verbrennungsmotors 1 erfolgt im Fahrbetrieb zweckmäßigerweise automatisch in Abhängigkeit vom Druck im Druckspeicher 8.

Das erfindungsgemäße Antriebssystem bietet den Vorteil des problemlosen Anschlusses von beliebig vielen Nebenantrieben parallel zum Hauptantrieb 1,2 (deshalb auch "erste" Nebenpumpe 3 bzw. "erster" Nebenantrieb 4).

Der Speichersicherheitsblock 7 ist eine im Handel erhältliche Baueinheit, deren Verwendung im Zusammenhang mit Druckspeichern vorgeschrieben ist. In der Reihenfolge von links nach rechts in Fig. 1 umfaßt dieser Block 7 manuell betätigbare Ventile für den Zulauf zum Speicher 8, für die Entleerung des Speichers 8 in das Reservoir 17 und ein Druckbegrenzungs- bzw. Überdruckventil mit Überlauf in das Reservoir 17. Der mit einem Doppelpfeil versehene Anschluß am Block 7 dient zur Überprüfung bzw. Anzeige des Speicherdruckes und/oder zum Anschluß weiterer Speicher.

Der Energiespeicher bzw. Hydraulikakkumulator bzw. Druckspeicher 8 ist ein an sich bekannter Bauteil der aus einem druckfesten Behälter besteht, der durch eine flexible Membran, einen Kolben, eine Gummiblase, od.dgl. in zwei druckdichte Teilräume 8', 8'' unterteilt ist, von denen der Teilraum 8' mit der Druckflüssigkeit und der Teilraum 8'' mit einem Gas, z.B. Stickstoff, gefüllt ist. Mehrere dieser Druckspeicher 8 können in den bei einem Kraftfahrzeug seitlich vorhandenen, ungenützten Freiräumen problemlos untergebracht werden, wobei verschiedene Typen und Bauformen solcher Speicher ohne weiteres kombiniert werden können.

Im Falle der in Fig. 1 dargestellten Beschleunigungsphase wird beim Niederdrücken des Gaspedals (nicht dargestellt) das Rückschlagventil 9 magnetisch entsperrt und der Druckflüssigkeit der Weg zum Hydromotor 10 freigegeben. Die durch das Pfeilsymbol im Hydromotor 10 angedeutete Verstellung der Schräg- bzw. Schwenkscheibe des Hydromotors 10 wird vom Gaspedal im Bereich von 0 bis A für die Beschleunigungsphase je nach dem an den Rädern erforderlichen bzw. gewünschten Drehmoment vorgenommen. Dazu ist eine nicht dargestellte, übliche Wirkverbindung (elektrisch, mechanisch od.dgl.) zwischen dem Gaspedal und der Schwenkscheibensteuerung vorgesehen.

Ein solcher, verstellbarer Hydromotor 10 wird auch als hydrostatischer Hydromotor mit Sekundärregelung bezeichnet. Das Rückschlagventil 9 ist deshalb vorgesehen, um den Druckflüssigkeitszulauf leckfrei abzusperren, wenn das Fahrzeug steht; allfällige Leckflüssigkeit wird über die strichlierte Leitung vom Hydromotor 10 direkt in das Reservoir 17 abgeführt.

Die in der Beschleunigungsphase (Fig. 1) durch den Hydromotor 10 durchlaufende Druckflüssigkeit, deren Energie in an den Rädern R wirksame, mechanische Antriebsenergie umgesetzt wird, strömt durch das Vorspannventil 13, das Filter 14 und den Kühler 15 in das Reservoir 17 zurück. Mit 12 ist eine Verschmutzungsanzeige für das Filter 14 bezeichnet; beim Kühler 15 ist die Zu- und Abfuhr eines Kühlmediums durch Pfeile angedeutet.

Ein weiterer Kreislauf der Druckflüssigkeit verläuft vom Reservoir 17 über die mechanisch vom Hydromotor 10 angetriebene Speisepumpe samt Vorspannventil, welche beiden Bauteile als Einheit mit dem Bezugszeichen 11 bezeichnet sind. Dieser Speisepumpenkreis 11 beseitigt allfällige Probleme, die durch das Ansaugverhalten (in der Verzögerungsphase, vergl. Fig.3) des Hydromotors 10 auftreten können und ist ebenfalls an sich aus der Industriehydraulik bekannt. Die Speisepumpe 11 fördert eine etwas größere Menge an Druckflüssigkeit, als dem Hubvolumen des Hydromotors 10 entspricht, und sichert so den Speisebetrieb des Hydromotors 10 in der Verzögerungsphase durch Bereitstellung und Aufrechterhaltung eines bestimmten Grunddrucks bzw. Speisedrucks am reservoirseitigen Anschluß des Hydromotors 10. Das Vorspannventil im Speisepumpenkreis 11 kann auf einem etwas höheren Druck eingestellt sein als das Ventil 13.

In der in Fig. 1 dargestellten Beschleunigungsphase wird die von der Speisepumpe 11 geförderte Druckflüssigkeit vom Hydromotor nicht benötigt und kehrt über die Elemente 13, 14, 15 in das Reservoir 17 zurück.

Der Strömungsverlauf der Druckflüssigkeit ist durch Pfeile angedeutet.

In Fig. 2 ist das erfindungsgemäße Antriebssystem nach Fig. 1 in der Freilaufphase dargestellt. Das Pfeilsymbol verbleibt in der 0-Stellung und demgemäß ist auch die Schrägscheibe des Hydromotors 10 in ihrer geraden Neutralstellung, so daß der Hydromotor 10 weder als Motor noch als Pumpe wirkt. Das Gaspedal des Kraftfahrzeuges ist in Ruhestellung und daher das Rückschlagventil 9 geschlossen und verriegelt. Im Hydromotorkreislauf findet keine Strömung von Druckmittel statt, der Speisepumpenkreis 11 arbeitet in gleicher Weise wie in der Beschleunigungsphase, da die Speisepumpe von den Rädern R des freilaufenden Kraftfahrzeuges über den ebenfalls frei mitlaufenden Hydromotor 10 mechanisch weiterhin angetrieben wird. Nur bei Stillstand des Kraftfahrzeuges arbeitet die Speisepumpe im Speisekreis 11 nicht mehr.

In Fig. 3 ist das erfindungsgemäße Antriebssystem nach Fig. 1 in der Verzögerungsphase dargestellt. Die im Verstellbereich von 0 bis B mit dem Bremspedal des Kraftfahrzeuges in Wirkverbindung stehende Schrägscheibe des Hydromotors 10 (Pfeilsymbol in Fig. 3) wird so verstellt, daß der Hydromotor 10 nunmehr als von den sich in gleicher Richtung wie vorher weiterdrehenden Rädern des Kraftfahrzeuges angetriebene Pumpe für die Druckflüssigkeit wirkt, welch' letztere aus dem Speisekreis 11 angesaugt und über das Ventil 9 in den Druckspeicher 8 bis zu dessen voller Aufladung rückgefördert wird. Wenn der maximale Speicherdruck erreicht ist, wird die Druckflüssigkeit über das Druckbegrenzungsventil im Speichersicherheitsblock 7 in das Reservoir 17 abgeführt. Die Brems- bzw. Verzögerungwirkung bleibt voll erhalten, da der nunmehr als Pumpe arbeitende Hydromotor 10 gegen den maximalen Speicherdruck arbeiten muß. Auf diese Weise wird bei jedem Bremsvorgang die kinetische Energie des Kraftfahrzeuges zur Auffüllung des Druckspeichers 8 benützt und abgesehen von den geringen Reibungs- und Strömungsverlusten auch voll ausgenützt. Diese Energie steht dann beispielsweise für einen auf den Bremsvorgang folgenden Beschleunigungsvorgang voll zur Verfügung, wodurch sich u.a. die beträchtliche Treibstoffeinsparung durch das erfindungsgemäße Antriebssystem ergibt.

Die Fig. 4 zeigt in analoger Darstellung zur Fig. 1 den Schaltplan des erfindungsgemäßen Antriebssystems für einen Vierradantrieb, wobei jedes Rad R von einem eigenen, gemeinsam oder selbständig verstellbaren, Hydromotor 10.1, 10.2, 10.3 und 10.4 angetrieben wird. Jedem dieser Hydromotoren ist ein eigener Speisekreis 11.1, 11.2, 11.3, 11.4 zugeordnet, der wie im Falle der Fig. 1-3 aus einer Speisepumpe mit Vorspannventil besteht. Die übrigen Bauteile sind mit jenen in Fig. 1-3 gleich, die Wirkungsweise ist ebenfalls gleich.

Dies gilt ebenso für die in Fig. 5 dargestellte Freilaufphase des Vierradantriebes, die hinsichtlich der Funktionsweise der Fig.2 entspricht.

Gleiches gilt auch für die in Fig. 6 dargestellte Verzögerungsphase des Vierradantriebes, deren Funktion der Fig. 3 entspricht.

Durch das Vorsehen eines eigenen, selbständig und unabhängig von den anderen Hydromotoren verstellbaren Hydromotors für jedes einzelne Rad können auf besonders elegante und einfache Art und Weise alle heute gestellten technischen Forderungen an den Antrieb verwirklicht werden. Es ist damit sowohl Antischlupfregelung als auch Antiblockiersystem, Sperrdifferential vorne und/oder hinten und Zentraldifferentialsperre möglich.

Es muß für diese Ausgestaltungen zwischen Gaspedal und die Regeleinrichtungen der Schrägscheiben der einzelnen Hydromotoren 10.1, 10.2, 10.3, 10.4 ein Rechner zwischengeschaltet werden, der die von bekannten Sensoren oder Steuerorganen gegebenen Signale entsprechend in unterschiedliche oder gleiche Schrägstellungen der einzelnen Schrägscheiben umsetzt.

Zusätzlich können bei einem solchen Zwei- oder Vierradantrieb mit je einem Hydromotor 10 pro angetriebenen Rad R bei Kurvenfahrt die Antriebsmomente bzw. Drehzahlen der angetriebenen Räder einzeln verändert und optimiert werden. Verspannungen in der Antriebsmechanik sind somit ausgeschlossen.

Durch die Umwälzung der Druckflüssigkeit mit anschließender Rückführung in das Reservoir 17, beispielsweise durch den Speisekreis 11 bzw. die Speisekreise 11.1, 11.2, 11.3, 11.4, insbesondere auch im Falle einer längeren Bremsphase, tritt im Reservoir 17 durch die Bewegung und Vermischung der Druckflüssigkeit eine erwünschte Vergleichmäßigung der Temperatur dieser Flüssigkeit ein.

In allen Figuren ist mit Pfeilen die jeweilige Fließrichtung der Druckflüssigkeit in der jeweiligen Betriebsphase angedeutet.

Es sei nochmals hervorgehoben, daß ein wesentlicher Aspekt des erfindungsgemäßen Antriebssystems in der Unabhängigkeit des die Räder des Kraftfahrzeuges antreibenden Abtriebsmotors (Hydromotor 10 bzw. 10.1, 10.2, 10.3, 10.4) und der übertragenen Energie von der im gleichen Zeitpunkt vom Verbrennungsmotor 1 oder anderen Antriebsquellen 4 erzeugte Energie ist. Diese Unabhängigkeit wird durch die Zwischenschaltung eines als Zwischenpuffer wirkenden Druckspeichers 8 erzielt.

Ein weiterer wesentlicher Aspekt des erfindungsgemäßen Antriebssystemes ist die nahezu vollständige Verwertung der Bremsenergie.

Beim erfindungsgemäßen Antriebssystem dient somit die Hydrostatik nicht wie in bekannten Fällen als Ersatz für ein mechanisches Getriebe (dessen grundsätzliche Charakteristik darin besteht, vom Verbrennungsmotor erzeugte Leistung unmittelbar in verschiedenen Übersetzungen über die Achse an die Räder zu übertragen), sondern bezieht zuallererst die Energie aus verschiedenen Antriebsquellen 1-4 und speichert diese in den Druckspeichern 8 bzw. Hydraulikakkumulatoren.

Dies bedeutet, daß im Gegensatz zu den heutigen Antrieben auch dann Energie für den Fahrbetrieb vorhanden ist, wenn der Verbrennungsmotor 1 nicht läuft bzw., daß die Antriebsenergie auch aus anderen Quellen (siehe z.B. Bremsenergierückgewinnung) als dem Verbrennungsmotor 1 kommt.

Dieses Energie-Speichersystem hat zusätzlich den Vorteil, daß es für kurze Zeiträume (Beschleunigen) erheblich mehr Leistung als jene aus dem Verbrennungsmotor 1 zur Verfügung stellen kann. Auch dies ist ein Unterschied zu heute üblichen Antriebssystemen, bei denen höchstens die Leistung des Verbrennungsmotors 1 verfügbar ist.

Als wichtige Ergänzung des erfindungsgemäßen Antriebssystemes dient zur Aufladung der Speicher 8 als Energiequelle die Bremsenergie, die nicht, wie bei heute üblichen Bremssystemen über Reibbeläge in Hitze umgesetzt wird oder als mechanische Energie über die (Verbrennungs-)Motorbremse vernichtet wird. Die Schwungenergie des Fahrzeuges wird zu einem erheblichen Teil durch generatorischen Betrieb des Hydromotors 10 zurückgewonnen und im Hydraulikakkumulator bzw. Druckspeicher 8 gespeichert.

Der Verbrennungsmotor 1 muß daher nur noch die fehlende Energie (Differenzenergie durch Wirkungsgradverluste) erzeugen.

Im praktischen Fahrbetrieb startet der Verbrennungsmotor 1 und füllt mit niedriger Drehzahl laufend über die Hydraulikpumpe 2 den Energie- bzw. Druckspeicher 8. Wenn der Energiespeicher 8 ganz oder teilweise gefüllt ist, kann der Fahrbetrieb beginnen. Der Speicher 8 kann natürlich auch schon durch einen vorhergehenden Bremsvorgang oder den Solarantrieb 4 gefüllt sein; dann kann man mit dem Fahrbetrieb beginnen, ohne vorher den Verbrennungsmotor 1 starten zu müssen.

Zur Beschleunigung steht nun die Energie aus dem Druckspeicher 8 zur Verfügung und die Schwenkscheibe des Hydromotors 10 wird zur Seite A (Fig. 1 bzw. 4) verstellt. Entsprechend der Verstellung steht das gewünschte Antriebs-(Beschleunigungs-)Drehmoment zur Verfügung.

Ist die gewünschte Geschwindigkeit erreicht, kann zur Betriebsphase "Freilauf" übergegangen werden, dabei steht die Schwenkscheibe des Hydromotors 10 in der neutralen Mittelstellung 0 (Fig. 2 bzw. 5).

In der Betriebsphase "Verzögern" arbeitet der Hydromotor 10 durch Verstellung der Schwenkscheibe zur Seite B (Fig. 3 bzw. 6) als Pumpe (generatorischer Betrieb) und fördert nun Hydraulikflüssigkeit aus der Rücklaufleitung in die Druckleitung zum Druckspeicher 8.

Das Verzögerungsmoment (Bremsmoment) hängt dabei vom Druck in der Druckleitung bzw. im Druckspeicher 8 ab und wird über den Verstellwinkel der Schrägscheibe geregelt, sodaß der Fahrer über die Bremspedalstellung ein bestimmtes Bremsmoment vorgibt, das bei unveränderter Pedalstellung bis zum Stillstand gleich groß bleibt. Der Fahrer kann über eine veränderte Bremspedalstellung das Bremsmoment bis zum Blockieren der Räder R (wenn nicht durch ABS-System geregelt) erhöhen.

In diesem generatorischen Betrieb wird unmittelbar und ohne große Verluste volumetrisch Druckflüssigkeit in den Druckspeicher 8 gefördert. Es wird damit ein hoher Wirkungsgrad bei dieser Energierückgewinnung erreicht. In der daruaffolgenden Beschleunigungsphase steht somit ein Großteil der in der Bremsphase zurückgewonnenen Energie zur Verfügung. Sollte der Fahrer eine höhere Geschwindigkeit oder eine längere Beschleunigung wünschen, startet der Verbrennungsmotor 1 und liefert diese Differenzenergie in den Druckspeicher 8.

Ebenso können während einer kürzeren oder längeren Stillstandphase, z.B. auch Parken, andere Energieträger, z.B. Solarenergie, mit einer sehr kleinen Antriebsleistung den Druckspeicher 8 über einen größeren Zeitraum vollständig aufladen.

Beim heutigen Stand der Technik wird der Verbrennungsmotor 1 bei ständig wechselndem Fahrbetrieb ohne längeren Stillstand dauernd laufen, um die heute noch vorhandenen Rollreibungs-, Strömungsverluste und ähnliches mehr zu ergänzen. Der Verbrennungsmotor 1 wird jedoch nur mit geringer Drehzahl laufen bzw. kann immer im wirtschaftlichsten Drehzahlbereich arbeiten, da er über einen längeren Zeitraum nur noch diese Verluste ergänzen und nicht wie bisher üblich zu jedem Zeitpunkt des Fahrbetriebes stets die momentan geforderte Leistung liefern muß. Bleibt das Fahrzeug verkehrsbedingt stehen, läuft der Verbrennungsmotor 1 kurz nach, um mit der Pumpe 2 den Druckspeicher 8 restlos aufzufüllen. Dann wird der Verbrennungsmotor 1 abgestellt.

Kleinere Fahrstrecken mit niedriger Geschwindigkeit (z.B. Schrittgeschwindigkeit im Verkehrsstau) werden ohne den Verbrennungsmotor 1 gefahren. Erst wenn der Druckspeicher 8 wieder großteils entladen ist, startet der Verbrennungsmotor 1 erneut automatisch, um den Speicher 8 aufzufüllen.

Bei einem Verkehrsstau wird somit der Ausstoß an Abgasen und Lärm auf einen Bruchteil des heutigen Wertes gesenkt. Auch im normalen Fahrbetrieb wird durch die geringere vom Verbrennungsmotor 1 gelieferte Leistung und das geringe Drehzahlniveau dieses Motors 1 eine beträchtliche Verringerung des Kraftstoffverbrauches und eine drastische Reduzierung der Abgasmenge und des abgestrahlten Lärms erreicht. Trotzdem bleibt die bisher gewohnte Fahrdynamik des Kraftfahrzeuges voll erhalten und wird durch die kurzfristig möglichen Entnahmen von Spitzenleistungen aus dem Druckspeicher 8 sogar noch verbessert. Diese Vorteile werden vor allem im "STOP and GO"-Betrieb augenfällig, sind aber auch bei Autobahnfahrten von großem Vorteil, da bei der heute üblichen Verkehrsdichte auch dort immer wieder Bremsvorgänge (mit entsprechender Energiespeicherung im Speicher 8) erforderlich sind.

## Patentansprüche

1. Antriebssystem für Kraftfahrzeuge, wobei für den Antrieb mindestens zwei Räder (R) an zumindest einer Achse mindestens ein hydrostatischer Hydromotor (10) vorgesehen ist, der von mindestens einer mittels eines Verbrennungsmotors (1) und/oder eines Elektromotors (4) angetriebenen Pumpe (2,3) über einen zwischengeschalteten Druckspeicher (8) mit Druckflüssigkeit angetrieben ist, wobei die beim Bremsen des Fahrzeuges anfallende Bremsenergie über den dabei als Pumpe wirkenden Hydromotor (10) zum Aufladen des Druckspeichers (8) ausnützbar ist und wobei die Antriebsverbindung vom Verbrennungsmotor (1) und/oder Elektromotor (4) zu den Rädern (R) des Kraftfahrzeuges ausschließlich auf hydraulischem Wege erfolgt, wobei weiters der Hydromotor (10) mit einer von außen verstellbaren Schräg- bzw. Schwenkscheibe ausgestattet ist und mit dem Druckspeicher (8) in einer direkten Zweirichtungsverbindung steht, wobei die Hochdruckseite beim Hydromotor (10) sowohl beim Beschleunigen als auch beim Bremsen des Kraftfahrzeuges immer am gleichen hydraulischen Anschluß des Hydromotors (10) angeordnet ist, gekennzeichnet durch die Kombination folgender an sich bekannter Merkmale:
im Bremsbetrieb versorgt der Hydromotor (10) einen aus einer Speisepumpe samt zugeordnetem Vorspannventil gebildeten Speisepumpenkreis (11) zur Förderung von Hydrauliköl aus dem drucklos gehaltenen Reservoir (17):
ein dem Hydromotor (10) vorgeschaltetes Rückschlagventil (9) sichert während der Betriebsphasen Stillstand und Leerlauf die leckfreie Absprerrung von Hydrauliköl vom Hydromotor (10).

2. Antriebssystem für Kraftfahrzeuge nach Anspruch 1, dadurch gekennzeichnet, daß es als Vierradantrieb ausgebildet ist, so daß für jedes der Fahrzeugräder (R) in an sich bekannter Weise ein eigener, damit verbundener Hydromotor (10) vorgesehen ist, und daß in an sich bekannter Weise pro Rad von Sensoren oder Steuerorganen gegebene Signale mittels eines Rechners in entsprechend unterschiedliche bzw. gleiche Schrägstellungen der einzelnen Schrägscheiben umsetzbar sind.

## Claims

1. An automotive system for motor vehicles, there being provided at least one hydrostatic hydromotor (10) for driving at least two wheels (R) on at least one axle, which hydromotor is driven with pressurized liquid by at least one pump (2,3) driven by means of an internal combustion engine (1) and/or an electric motor (4) via an interposed pressure accumulator (8), the braking energy generated when braking the vehicle being utilizable via the hydromotor (10) acting as a pump for charging the pressure accumulator (8), and the drive connection from the internal combustion engine (1) and/or the electric motor (4) to the wheels (R) of the motor vehicle being exclusively effected by hydraulic means, the hydromotor (10) furthermore being provided with a swash or swivel plate adjustable from the outside, and being in direct bidirectional connection with the pressure accumulator (8), the high-pressure side in the hydromotor (10) always being arranged at the same hydraulic connection of the hydromotor (10) when accelerating as well as when braking of the motor vehicle is carried out, characterized by the combination of the following features known per se:
in the braking mode, the hydromotor (10) supplies a feed pump circuit formed by a feed pump and an associated bias valve for transporting hydraulic oil from the reservoir (17) kept without pressure:
during the operation phases of standstill and idle running, a back pressure valve (9) preceeding the hydromotor (10) safeguards the leakage-free blocking of hydraulic oil from the hydromotor (10).

2. The automotive system for motor vehicles according to claim 1, characterized in that it takes the form of a four-wheel drive, so that a separate hydromotor (10) is provided for each of the vehicle wheels (R) and connected therewith in a fashion known per se, and in that signals given by sensors or control equipment for every wheel in a fashion known per se may be converted into accordingly different or identical inclinations of the individual swash plates.

## Revendications

1. Système de commande pour véhicules automobiles, d'au moins un hydromoteur hydrostatique (10) étant prévu pour la commande d'au moins deux roues (R) sur au moins un essieu, l'hydromoteur étant commandé avec fluide sous pression par au moins une pompe (2,3) commandée à l'aide d'un moteur à combustion interne (1) et/ou d'un moteur électrique (4) par voie d'un accumulateur hydraulique (8) intercalé, l'énergie de frein engendrée au cours du freinage du véhicule pouvant être utilisée par voie de l'hydromoteur (10) en ce cas agirant comme pompe pour charger l'accumulateur hydraulique (8), et la communication de commande entre le moteur à combustion interne (1) et/ou le moteur électrique (4) et les roues (R) du véhicule s'effectuant exclusivement par voie hydraulique, l'hydromoteur (10) de plus étant équipé avec un disque incliné ou disque de pivotement adjustable par l'extérieur, et étant en communication directe bidirectionelle avec l'accumulateur hydraulique (8), le côté haute pression dans l'hydromoteur (10) étant toujours positionné à la même connexion hydraulique de l'hydromoteur (10) pendant l'accélération aussi bien que pendant le freinage du véhicule, characterisé par la combinaison des caractères suivants connus en eux-memes:
dans le mode de freinage, l'hydromoteur (10) dessert un circuit de pompe d'alimentation (11) formé par une pompe d'alimentation et une soupape adjointe mise en précontrainte, pour le transport d'huile hydraulique du réservoir (17) maintenu sans pression
une soupape de retenue (9) précédant l'hydromoteur (10) assure l'arrêt sans fuite d'huile hydraulique de l'hydromoteur (10) pendant les phases d'opération de suspension et de marche à vide.

2. Système de commande pour véhicules automobiles selon la revendication 1, characterisé en ce qu'il est formé comme commande à quatre roues motrices, de sorte qu'un hydromoteur (10) propre est pourvu pour chaqu'une des roues (R) du véhicule de façon connue, et que des signaux donnés par des détecteurs ou des contrôleurs pour chaque roue de façon connue peuvent etre transformés en inclinations adéquatement differentes ou identiques des disques inclinés individuels.
